# EUROPEAN PATENT SPECIFICATION

(11) **EP 0 462 835 B1**
(45) Date of publication and mention of the grant of the patent: **13.08.1997**
(21) Application number: 91305595.0
(22) Date of filing: 20.06.1991
(51) Int. Cl.: B25B 23/10, B25B 27/14, B25B 23/04

(54) **Pneumatic collar installation tool**
Pneumatisches Werkzeug zum Setzen von Manschetten
Outil pneumatique pour la pose de collier

(30) Priority: 21.06.1990 US 542256
(43) Date of publication of application: 27.12.1991
(73) Proprietor: Fairchild Holding Corp., Chantilly, Virginia 22021-9998 (US)
(72) Inventor: Louw, John A., Temecula, California 92390-9175 (US)
(74) Representative: Greenwood, John David

(56) References cited:
- EP-A- 0 244 282
- EP-A- 0 368 813
- FR-A- 2 439 060
- FR-A- 2 522 572
- US-A- 3 247 741
- US-A- 3 385 378
- US-A- 4 602 537

## Description

This invention relates to a tool for installing threaded collars on a threaded pin or the like. It is particularly useful for installing a collar as described in U.S.-A-4,260,005 although also useful for standard hexagonal nuts or the like. Parts of the total tool described may be used for installing unthreaded collars.

### Background of the Invention

A variety of automatic tools have been developed over the years for rapidly installing nuts or collars on high-strength aerospace fasteners. The terms nut and collar are used interchangeably. Typically these automatic tools are pneumatically operated and can be used rapidly so that the myriad number of fasteners on modern aircraft or the like can be installed with a minimum amount of assembly time.

There are a variety of requirements for such tools. Collars should be automatically delivered to the tool in a position to be quickly installed on a bolt without manual intervention by the operator. For example, the tools should be useable in any orientation since the fasteners to be assembled may sometimes be overhead or beneath the worker or in front of the worker using the tool. For threaded fasteners, it is often desirable to provide a nonrotating key coaxial with a rotating nut to keep the threaded fastener or "pin" from rotating until the nut is installed.

Naturally, there are certain operating efficiencies which are also desirable. For example, the tools should operate quickly and reliably to provide uniform tightening of nuts on bolts. Preferably the time between installing one nut and having the next nut ready for installation should be minimized. The amount of air usage should be minimized.

Some collars, such as those in US-A-4,260,005, have a flange which is assembled against the workpiece being connected by the fastener. The mechanisms for handling such collars must be designed to accommodate such a flange. The flange geometries may vary with different embodiments of collars and some adaptability in that regard is therefore desirable in the automatic collar installation tool.

The present invention commences from EP-A-0,368,813 which discloses a tool according to the opening part of claim 1 appended hereto. According to this invention, therefore, there is provided a collar installation tool comprising a shaft, means for retaining a collar on the shaft and means around the shaft for fastening a collar on a pin or bolt, characterized by the retaining means comprising :
a circumferential groove in the shaft; and
a spring ring on the shaft having a larger inside diameter than the bottom of the groove in the shaft for freely rotating on the shaft, a larger outside diameter than the inside diameter of a collar, and a longitudinally extending split for accommodating changes in diameter for receiving a collar around the outside diameter of the ring and resiliently holding the collar.

The tool has a non-rotatable shaft within the rotatable member. A split spring ring on the shaft picks up the collar at the collar-delivery station and resiliently holds it. The spring ring rotates when the collar rotates during assembly on a bolt. The non-rotatable shaft includes a key for keeping a bolt from rotating. There are also means for resiliently biasing the shaft within the rotatable driver for accommodating axial advance of the driver along the length of the collar.

When the installation tool operates, a collar-delivery plunger axially shifts from a retracted position to a pick-up position where the split ring on the shaft enters the bore of a collar in the shuttle. The collar shuttle is then retracted for clearing the collar as it advances further with the plunger. The plunger then advances a second distance toward a workpiece where it is threaded onto a bolt by the rotating driver. Meanwhile, another collar is fed to the collar shuttle in its retracted position.

The present invention will now be described by way of example in the following detailed description when considered in connection with the accompanying drawing wherein:

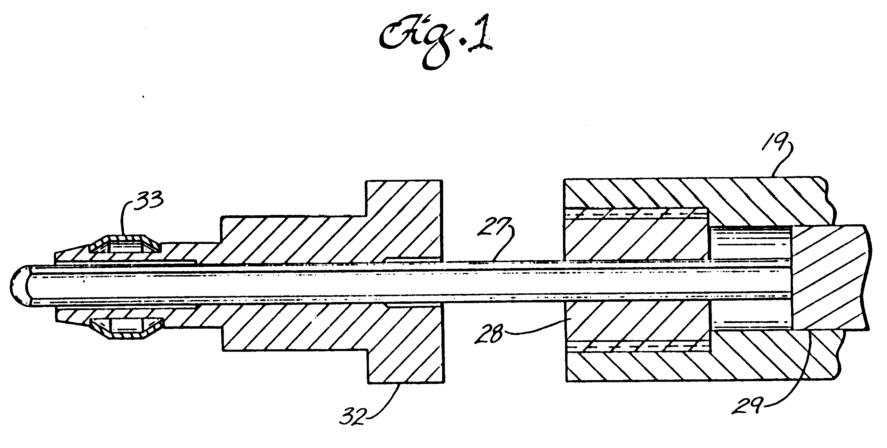

FIG. 1 is a detail, in partial longitudinal cross-section, of the collar pickup assembly.

A collar pickup mechanism includes a hexagonal key 27 which passes through the hexagonal hole of a retaining ring 28 threaded into the end of a plunger tube 19 with a left-hand thread to keep it from coming loose during use of the tool. The end of the key engages a movable plug 29 which can slide axially within the tube. The retaining ring 28 keeps the plug 29 within the tube. The plug is biased toward the front of the tube by a long coil spring (not shown). A stepped shaft 32, which also has a hexagonal hole, fits on the other end of the key 27. A collar retaining spring ring 33 fits in a circumferential groove around the stepped shaft 32. In use, the key 27 serves to engage a correspondingly-shaped recess in a threaded pin onto which a collar is to be threaded, to prevent the pin from rotating with the collar.

The spring ring is generally barrel-shaped to provide an external lead for entering the bore of a collar. The outside diameter of the spring ring is slightly larger than the diameter at the crest of the thread in the collar. Thus, as the spring ring moves into the collar, the ring is compressed and frictionally engages the bore of the collar along the thread crest. The degree of compression of the spring ring by the collar and clearance between the inside of the spring ring and the groove in the stepped shaft are sufficient that, when fully compressed by a standard collar, there is still clearance between the shaft and ring and the ring can rotate relative to the shaft.

To get the appropriate frictional contact between the spring ring and thread in an exemplary embodiment, for gripping a number 10 nut, the ring has an outside diameter of 4.2 millimeters, a wall thickness of 0.18 millimeter, a length of 3 millimeters, a lead of 15 degrees over 1/4 of the length of the spring ring. The ring has a slot about 1/2 millimeter wide on one side at an angle of about 15 degrees from the axis of the ring. A radial clearance of about 0.2 millimeter between the ring and shaft permits free rotation of the ring when inserted in a nut. Other dimensions would be appropriate for other sizes of nuts.

As noted above, the plug 29 in the plunger tube is spring biased toward the front end of the tube by the coil spring (not shown), which bears at its opposite end against the plug 24 which is fixed relative to the housing of the tool. The spring is designed so that when the plunger assembly is in its retracted position, the spring force is about 4.5 to 5 kilograms. Thus, as the plunger assembly moves from its retracted position to the collar pickup position, there is a force of about 4.5 to 5 kilograms pressing the ring into the collar, which is adequate for securely mounting the collar on the spring ring.

On the other hand, when the plunger assembly is in its fully extended position, the spring force biasing the collar pickup assembly forward drops off to about 1/2 to 1 kilogram. The lower spring force makes it easier to place the collar on the bolt and advance the collar driver over the collar.

## Claims

1. A collar installation tool comprising a shaft (32), means for retaining a collar on the shaft and means around the shaft for fastening a collar on a pin or bolt, characterized by said retaining means comprising:
a circumferential groove in the shaft (32); and
a spring ring (33) on the shaft having a larger inside diameter than the bottom of the groove in the shaft for freely rotating on the shaft, a larger outside diameter than the inside diameter of a collar, and a longitudinally extending split for accommodating changes in diameter for receiving a collar around the outside diameter of the ring (33) and resiliently holding the collar.

2. A collar installation tool according to claims 1 further comprising a non-rotating key (27) coaxial with the shaft (32) and extending therefrom for engaging a threaded pin or bolt to prevent rotation of the threaded pin or bolt when threading a collar thereon.

## Patentansprüche

1. Werkzeug zum Setzen von Manschetten, das einen Schaft (32), Mittel zum Zurückhalten einer Manschette auf dem Schaft und Mittel (36) um den Schaft herum zum Befestigen einer Manschette auf einem Stift, einem Bolzen oder einer Schraube umfaßt,
dadurch gekennzeichnet, daß die Rückhaltemittel:
eine umlaufende Nut in dem Schaft (32) und
einen Federring (33) auf dem Schaft mit einem inneren Durchmesser, der größer als der Boden der Nut in dem Schaft für eine freie Drehung auf dem Schaft ist, einem äußeren Durchmesser, der größer als der innere Durchmesser einer Manschette ist, und einem sich in Längsrichtung erstreckenden Schlitz zur Aufnahme von Änderungen in dem Durchmesser, um eine Manschette um den äußeren Durchmesser des Ringes (33) herum aufzunehmen und die Manschette federnd zu halten, umfassen.

2. Werkzeug zum Setzen von Manschetten nach Anspruch 1, das weiterhin eine nicht-drehbare Längspaßfeder (27), die coaxial zu dem Schaft (32) verläuft und sich von diesem ausgehend erstreckt, um in einen mit Gewinde versehenen Stift oder Bolzen einzugreifen, um Drehung des mit Gewinde versehenen Stiftes oder Bolzens zu verhindern, wenn eine Manschette aufgeschraubt wird.

## Revendications

1. Outil de pose de colliers comprenant un arbre (32), des moyens pour retenir un collier sur l'arbre et des moyens (36) autour de l'arbre pour fixer un collier sur une goupille ou un boulon, caractérisé en ce que lesdits moyens de retenue comprennent une gorge circonférentielle dans l'arbre (32), un anneau élastique (33) sur l'arbre ayant un diamètre intérieur plus grand que le fond de la gorge dans l'arbre pour tourner librement sur l'arbre, un diamètre extérieur plus grand que le diamètre intérieur du collier, et une fente s'étendant longitudinalement pour s'adapter aux changements de diamètre pour recevoir un collier autour du diamètre extérieur de l'anneau (33) et maintenir le collier élastiquement.

2. Outil de pose d'un collier selon la revendication 1 comprenant en outre une clavette empêchant la rotation (27), coaxiale avec l'arbre (32) et s'étendant à partir de celui-ci pour coopérer avec une goupille filetée ou un boulon pour empêcher la rotation de la goupille filetée ou du boulon lors du vissage d'un collier sur celui-ci.
